# EUROPEAN PATENT APPLICATION

(11) **EP 1 863 273 A1**
(43) Date of publication of application: **05.12.2007**
(21) Application number: 06729164.1
(22) Date of filing: 15.03.2006
(51) Int. Cl.: H04N 5/335, G06T 1/00, H04N 1/028

(54) **IMAGE PICKUP DEVICE, SIGNAL PROCESSING DEVICE AND SIGNAL PROCESSING METHOD**

(30) Priority: 15.03.2005 JP 2005073587
(71) Applicant: OMRON CORPORATION, Kyoto-shi, Kyoto 600-8530 (JP)
(72) Inventor: NOSE, Takashi, OMRON CORPORATION, Shimogyo-ku, Kyoto-shi, Kyoto, 6008530 (JP); OGAKI, Tatsuo, OMRON CORPORATION, Shimogyo-ku, Kyoto-shi, Kyoto, 6008530 (JP)
(74) Representative: Brykman, Georges
(86) International application number: PCT/JP2006/305143
(87) International publication number: WO 2006/098374

(57) **Abstract**

An imaging device for reducing fixed pattern noise caused by dark current or the like. The imaging device (10) includes a solid state imaging device (11) and a signal processor (12). The solid state imaging device (11) includes a plurality of image cells (Ca) and generates a pixel signal having a logarithmic characteristic that is in accordance with the amount of incident light entering each image cell (Ca). The signal processor (12) includes a correction data table (33) that stores first correction data for correcting the pixel signal and a dark current error data table (34) that stores second correction data for correcting the pixel signal in a low illuminance range. The signal processor (12) has an offset correction computation circuit (31) for correcting the pixel signal based on the first correction data and generating first pixel data. Further, second correction data of the dark current error data table (34) corresponding to the first pixel data is read when necessary. Generation of the first correction data with the second correction data and generation of second pixel data correct variations caused by dark current or the like to an average value.

## Description

### TECHNICAL FIELD

The present invention relates to an imaging device, and more particularly, to a device and method for correcting a pixel signal.

### BACKGROUND ART

In the prior art, solid state image sensors are used to acquire various types of image data. Solid state image sensors include a CCD image sensor (hereafter referred to as CCD) and a CMOS image sensor (hereafter referred to as CMOS sensor). A CMOS sensor differs from a CCD in that a sensor unit and its peripheral circuits can be manufactured integrally during a CMOS process. This lowers the price as a set. However, variations in MOSFET characteristics, variations in wire impedance, and the like generate fixed pattern noise that is unique to a CMOS sensor. This lowers the image quality.

Japanese Laid-Open Patent Publication No. 11-298799 describes a processor that stores variations (offsets) in a plurality of optical sensors forming an image sensor (solid-state image sensor) as correction data, adds the correction data to the output values of the optical sensors to correct the output value of each optical sensor, and equalizes the output values of the optical sensors.

In each image cell, reverse bias applied to a light receiving element results in the flow of dark current. The dark current differs between image cells. Dark current subtly affects the output current (or the output voltage) under a bright environment (the amount of incident light being large). Thus, the output value is corrected by simply adding or subtracting the offset. However, under a dark environment (the amount of incident light being small), the dark current in each pixel causes variations in the output values that have undergone offset correction. Thus, the fixed pattern noise cannot be corrected in a low illuminance range just by adding or subtracting the correction data. Accordingly, the fixed pattern noise cannot be reduced in the low illuminance range.

### DISCLOSURE OF THE INVENTION

It is an object of the present invention to provide a device and method for reducing fixed pattern noise in a low illuminance range that would be caused by dark current or the like.

One aspect of the present invention provides an imaging device. A solid state imaging unit includes a plurality of image cells and generates a pixel signal having a logarithmic characteristic that is in accordance with an amount of incident light entering each image cell. A first storage unit stores first correction data for correcting the pixel signal. A second storage unit stores second correction data for correcting the pixel signal when generated in a low illuminance range with the incident light amount of at least one of the image cells being relatively small. A first correction means corrects the pixel signal based on the first correction data and generates first pixel data. A second correction means corrects the first pixel data based on the second correction data and generates second pixel data.

The second storage unit may include tables, the quantity of which is less than the amount of the plurality of image cells, as the second correction data. The first correction data includes a table number for associating each of the image cells with one of the tables and an offset value for correcting the pixel signal so that the first pixel data is the same in the plurality of image cells.

The imaging device may further include a determination means determining whether or not the first pixel data is included in the low illuminance range. The determination means provides the first data to the second correction means when the first pixel data is included in the low illuminance range and determines the first pixel data to be output data of the imaging device when the first pixel data is not included in the low illuminance range.

A second aspect of the present invention provides a signal processor. The signal processor receives a pixel signal from a solid state imaging unit. A first storage unit stores first correction data for correcting the pixel signal. A second storage unit stores second correction data for correcting the pixel signal when generated in a low illuminance range with the incident light amount of at least one of the image cells being relatively small. A first correction means corrects the pixel signal based on the first correction data and generates first pixel data. A second correction means corrects the first pixel data based on the second correction data and generates second pixel data.

A third aspect of the present invention provides a method for correcting a pixel signal of an image cell. The method includes the steps of generating first pixel data by correcting the pixel signal based on first correction data, and generating second pixel data by correcting the first pixel data based on second correction data for correcting the pixel signal when generated in a low illuminance range with the incident light amount of at least one of the image cells being relatively small.

### BRIEF DESCRIPTION OF THE DRAWINGS

Fig. 1 is a schematic block circuit diagram of an imaging device according to a first embodiment of the present invention;
Fig. 2 is a circuit diagram showing one example of an image cell included in the imaging circuit of Fig. 1;
Fig. 3 is a schematic diagram showing first correction data that is stored in a correction data table shown in Fig. 1;
Fig. 4 is a graph showing the relationship between the incident light amount (illuminance) and the output voltage in an output signal of the image cell shown in Fig. 2;
Fig. 5 is a graph showing the relationship between the incident light amount (illuminance) and the output voltage after offset correction has been performed on the output signal of Fig. 4;
Fig. 6 is a conceptual diagram showing deviations of the output voltage value from an average characteristic value in a low illuminance range of each output signal shown in Fig. 5;
Fig. 7 is a conceptual diagram showing a fixed pattern noise correction process in the signal processor shown in Fig. 1;
Fig. 8 is a schematic block circuit diagram of an imaging device according to a second embodiment of the present invention; and
Fig. 9 is a flowchart showing a fixed pattern noise correction process performed by a correction processing circuit shown in Fig. 8.

### BEST MODE FOR CARRYING OUT THE INVENTION

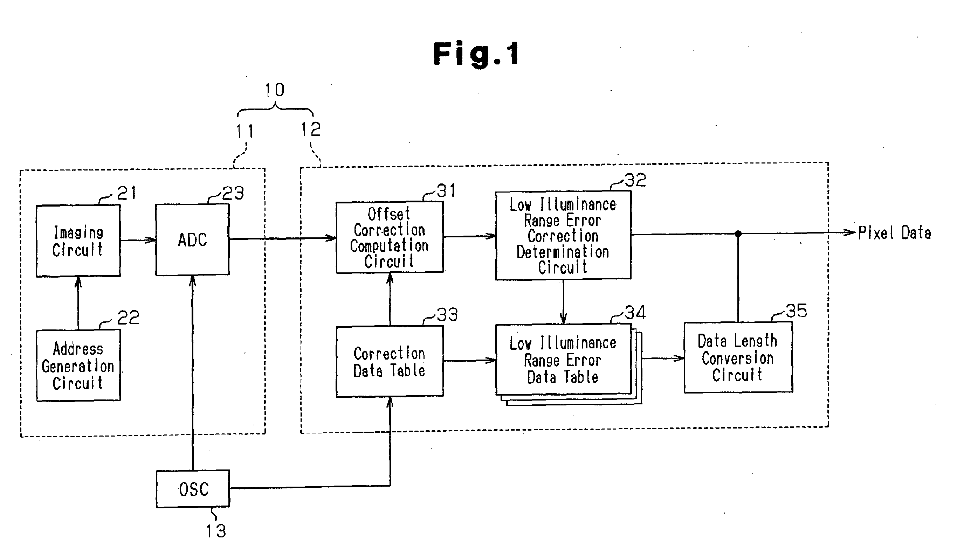

An imaging device 10 according to a first embodiment of the present invention will now be described with reference to Figs. 1 to 7.

Fig. 1 is a schematic block circuit diagram of the imaging device 10.

The imaging device 10 includes a solid state imaging device 11 functioning as a solid state imaging unit, a signal processor 12, and an oscillation circuit (OSC) 13. The oscillation signal 13 generates a clock signal CLK having a predetermined frequency and provides the clock signal CLK to the solid state imaging device 11 and the signal processor 12. The solid state imaging device 11 and the signal processor 12 operate in accordance with the clock signal CLK.

The solid state imaging device 11 includes an imaging circuit 21, an address generation circuit 22, and an A/D converter (ADC) 23. The imaging circuit 21 includes a plurality of image cells that are in a matrix array. Each image cell is a logarithm conversion type imaging device and generates a signal indicating a logarithmic characteristic that is in accordance with the incident light.

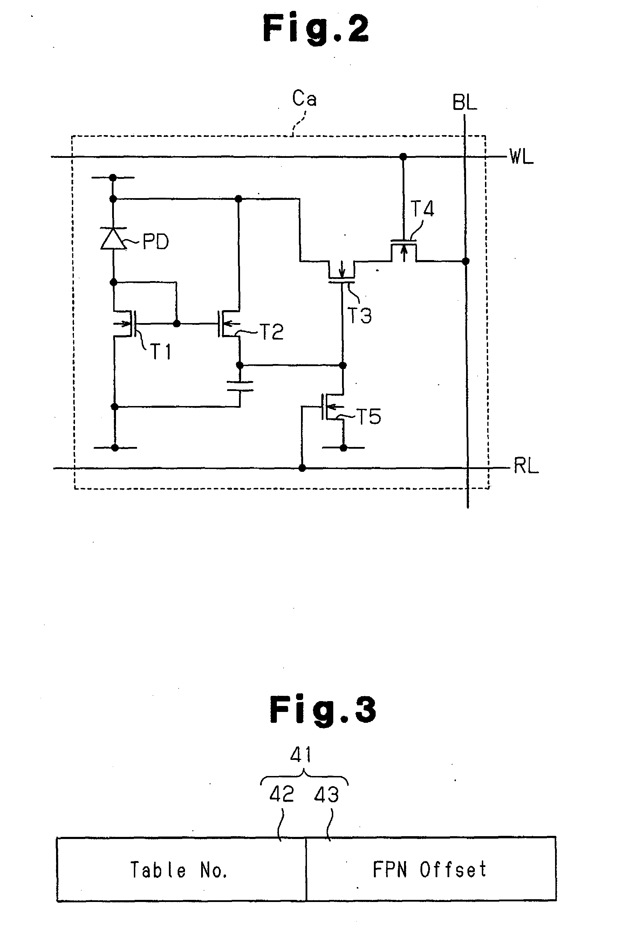

Fig. 2 is a circuit diagram showing an example of an image cell Ca included in the imaging circuit 21 of Fig. 1. The image cell Ca includes a photodiode PD. The anode of the photodiode PD is connected to a first transistor T1, and the cathode of the photodiode PD is connected to a high potential power supply. The first transistor T1, which is formed by an N-channel MOS transistor, includes a first terminal (source) connected to a low potential power supply, and a second terminal (drain) connected to the photodiode PD. The first transistor T1 has a control terminal (gate) connected to the drain of the first transistor T1 and the gate of a second transistor T2.

The photodiode PD generates a flow of photocurrent in accordance with the amount of incident light. The photocurrent operates the first transistor T1 in a sub-threshold range. The first transistor T1 logarithm-converts the voltage applied to its gate, and the converted voltage is applied to the gate of the second transistor. The voltage applied to the gate of the second transistor T2 is amplified by the second transistor T2 and a third transistor T3. The amplified voltage is provided to a bit line BL via a fourth transistor T4 that has been activated by voltage of a row selection line WL. Further, the image cell Ca includes a fifth transistor T5 that is connected to a reset line RL and reset by the potential at the reset line RL.

The address generation circuit 22 generates address signals for sequentially reading signals from a plurality of image cells forming the imaging cell and provides the address signals to the imaging circuit 21. In response to the address signals provided from the imaging circuit 21, the imaging circuit 21 generates signals having voltage (or current) that is in accordance with the photocurrent at the image cell located at a position corresponding to each address signal (intersection of row selection line WL and bit line BL selected by the address signal).

The ADC 23 functions in accordance with the clock signal CLK, converts the output signal of the imaging circuit 21 to a digital signal having a predetermined number of bits (e.g., ten bits), and provides the signal processor 12 with the digital signal as a pixel signal in synchronism with the clock signal CLK.

The signal processor 12 includes an offset correction computation circuit 31 functioning as a first correction means, a low illuminance range error correction determination circuit 32 functioning as a determination means, a correction data table 33 functioning as a first storage unit, a low illuminance range error data table 34 functioning as a second storage unit and a second correction means, and a data length conversion circuit 35.

The offset correction computation circuit 31 adds correction data read from the correction data table 33 to a pixel signal provided from the ADC 23 and generates a signal indicating the addition result (first pixel data). The correction data table 33 stores plural pieces of correction data 41 (first correction data) respectively corresponding to the plurality of image cells forming the imaging circuit 21.

As shown in Fig. 3, each piece of correction data 41 includes a table number 42 and a fixed pattern noise offset (FPN) 43. The table number 42 is a value designating a low illuminance range error data table 34. The FPN offset 43 is a value for offsetting a pixel signal, that is, a value of correcting variation of a pixel signal.

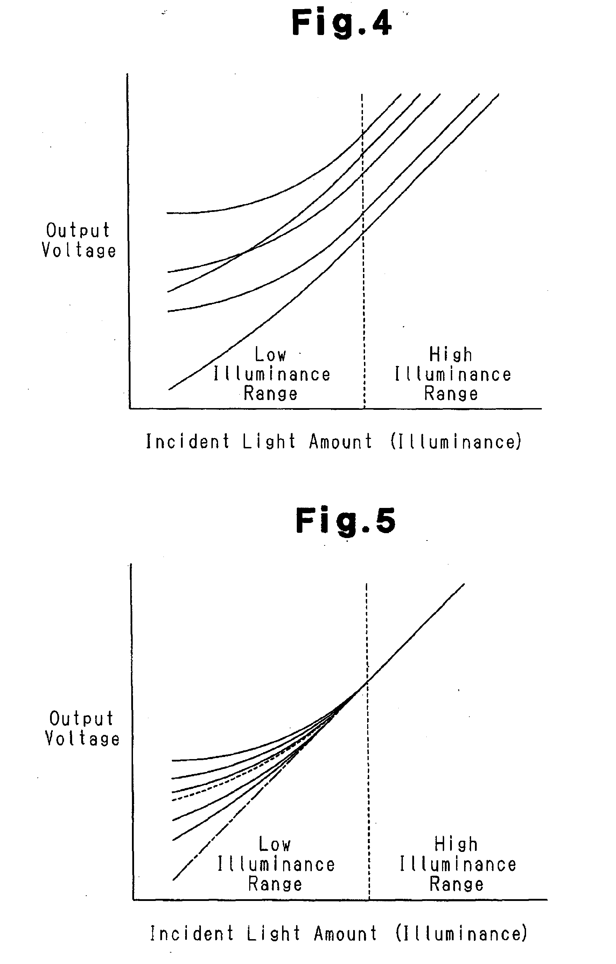

Fig. 4 is a graph showing the relationship between the incident light amount (illuminance) and the output voltage for an output signal (i.e., pixel signal) of each image cell Ca.

The output signal of the image cell Ca as a whole has a logarithmic characteristic. More specifically, in a high illuminance range in which the incident light amount is relatively large, the output signal has a substantially linear characteristic (incident light amount - output voltage characteristic). In a low illuminance range in which the incident light amount is relatively small, the output signal has the characteristic of a predetermined function. The FPN offset is correction data for equalizing voltages of a plurality of output signals in the linear portion of an output signal, that is, in the high illuminance range. The offset correction computation circuit 31 adds the FPN offset 43 read from the correction data table 33 to a pixel signal corresponding to each image cell Ca and generates a signal indicating the addition result.

Fig. 5 is a graph showing the relationship between the incident light amount (illuminance) and the output voltage for each output signal after the offset correction performed by the offset correction computation circuit 31. As shown in Fig. 5, the voltages of the output signals after the offset correction are substantially the same in the high illuminance range.

However, as shown in Fig. 5, the output signals after the offset correction vary in the low illuminance range. Accordingly, the output signals must also be corrected in the low illuminance range so that the voltages of the output signals are substantially the same.

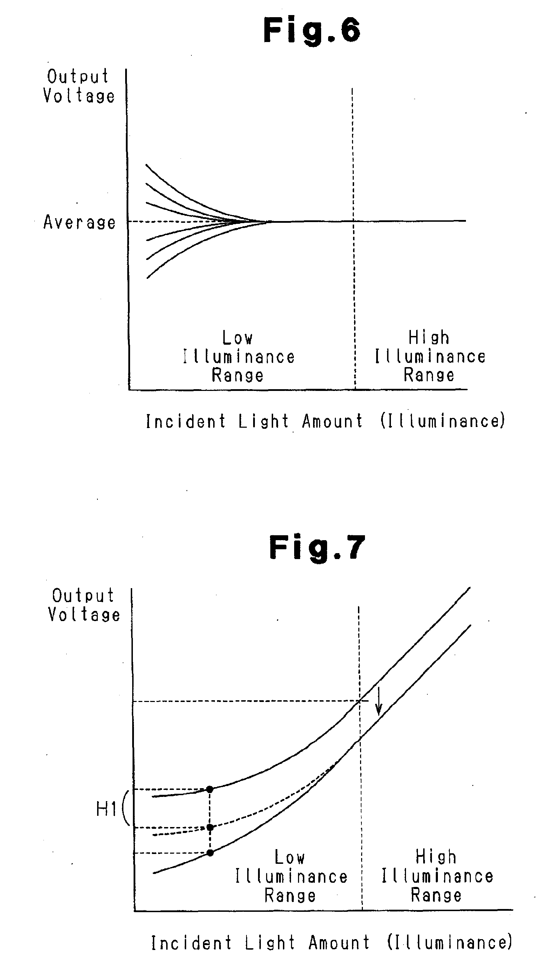

In detail, the average characteristic of the plurality of output signals after the offset correction is defined, and the average characteristic (shown by the broken line in Fig. 5) is used for corrections. Fig. 6 is a conceptual diagram showing deviations of output signal values from the average characteristic value (average value). As shown in Fig. 6, the output signal values are varying values that are higher or lower than the average value in the low illuminance range. This variation was obtained for each pixel through experiments and is represented by a predetermined function (e.g., y=ax⁴+bx²). In other words, the output signal of each image cell Ca is substantially the same as any one of values represented by the above function. Thus, tables (second correction data) for data of a plurality of curves having such characteristics are generated. The generated tables are stored in the low illuminance range error data table 34 in association with the image cells Ca. The quantity of tables stored in the data table 34 is less than the amount of image cells Ca included in the imaging circuit 21. Each table stores data for a single curve, and the corresponding relationship of the table and the image cell Ca is indicated by the table number 42.

When a value of an output signal after offset correction is included in the low illuminance range, the output signal value is replaced by a value of a table associated with the image cell Ca to correct the output signal value in the low illuminance range.

In detail, the low illuminance range error correction determination circuit 32 (hereafter referred to as the "determination circuit 32") determines whether or not dark current correction must be performed on an output signal that has undergone offset correction by using a threshold value that defines the low illuminance range and the high illuminance range. The threshold value is predetermined for the determination circuit 32. The determination circuit 32 determines whether or not the input value (output signal after offset correction) is greater than or equal to the threshold value. When the input value is greater than or equal to the threshold value, the input value is included in the high illuminance range. When the input value is less then the threshold value, the input value is included in the low illuminance range. Accordingly, when the input value is less than the threshold value, the determination circuit 32 provides the input value to the low illuminance range error data table 34. In the first embodiment, the threshold value is set to 256, which is represented by an eight-bit value. This corresponds to one fourth the range of the value expressed by a ten-bit output signal that is output from the offset correction computation circuit 31. Thus, when the output signal value of the offset correction computation circuit 31 is less than 256, a signal indicating the lower rank eight bit value of the output signal value is provided to the low illuminance range error data table 34.

The low illuminance range error data table 34 includes a plurality of tables as described above. The low illuminance range error data table 34 selects a table that corresponds to the table number 42 read from the correction data table 33 and generates a value corresponding to an output signal of the determination circuit from an element of the selected table as an after dark current correction signal (second pixel data).

The data length conversion circuit converts a signal having a predetermined bit number and generated by the low illuminance range error data table 34 to the bit number of the output signal of the determination circuit 32. In the first embodiment, the determination circuit 32 generates a signal having ten bits, and the low illuminance range error data table 34 generates a signal having eight bits. The number of bits of the signal generated by the low illuminance range error data table 34 corresponds to the low illuminance range. In other words, although the signal provided from the imaging circuit 21 has ten bits, eight bits of data are used to correct a signal in the low illuminance range. Accordingly, the data length conversion circuit 35 converts an eight-bit signal provided from the low illuminance range error data table 34 to a ten-bit signal.

As shown in Fig. 7, the signal processor 12 first performs offset correction on a signal (pixel signal) generated by the solid state imaging device 11 with the FPN offset 43 (offset value H1) read from correction data table 33. Then, the signal processor 12 replaces the value of the low illuminance range signal with a value of a table corresponding to the image cell Ca in the low illuminance range error data table 34. A low illuminance range signal is corrected in this manner.

The imaging device 10 of the first embodiment has the advantages described below.
(1) The imaging device 10 includes the solid state imagine device 11 and the signal processor 12. The solid state imaging device 11 includes a plurality of image cells Ca that generates a signal for the incident light amount indicated by the logarithmic characteristic. The signal processor 12 includes the correction data table 33, which stores correction data for correcting the offset (variation) of output values of the image cells Ca, and the low illuminance range correction data table 34, which stores a correction value for correcting variations in the output values of the image cells Ca in the low illuminance range. The offset correction computation circuit 31 of the signal processor 12 corrects the offset of the output values of the image cells Ca based on the correction data. Further, the correction value of the low illuminance range error data table 34 corresponding to the corrected data is read when necessary. The correction value corrects variations in the output values caused by dark current or the like to a predetermined characteristic (e.g., average value). This reduces fixed pattern noise in the low illuminance range that may result from dark current or the like.
(2) The output values of the image cells Ca are varying values that are higher or lower than the average value in the low illuminance range. The variation between the pixels is expressed by a predetermined function. The output values become substantially the same as one of values of several characteristics represented by the predetermined function. The low illuminance range error data table 34 stores a plurality of tables respectively corresponding to plural pieces of curve data indicating the above characteristics. The quantity of tables is less than the amount of image cells Ca. Thus, the correction data is reduced in comparison with when storing correction data in correspondence with each of the image cells Ca. This enables reduction in the memory capacity of the signal processor 12. Therefore, the circuit scale of the signal processor 12 may be reduced, and fixed pattern noise caused by dark current or the like may be reduced.
(3) The signal processor 12 includes the determination circuit 32 for determining whether or not the data that has undergone offset correction is included in the low illuminance range. When data is included in the low illuminance range after the offset correction, the low illuminance range error data table 34 is used to correct the data. When data is not included in the low illuminance range after the offset correction, the data is output without undergoing any processing. Accordingly, in comparison to when correcting each piece of data with the low illuminance range error data table 34, the time for processing data that is not included in the low illuminance range is shortened.

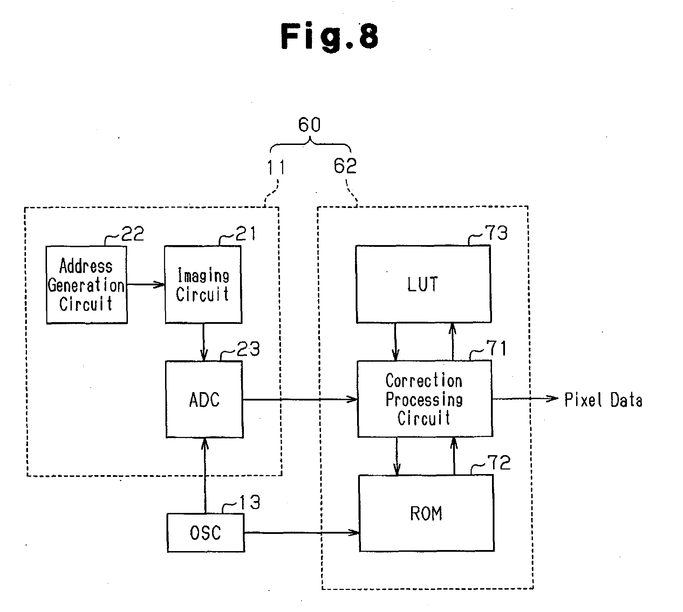

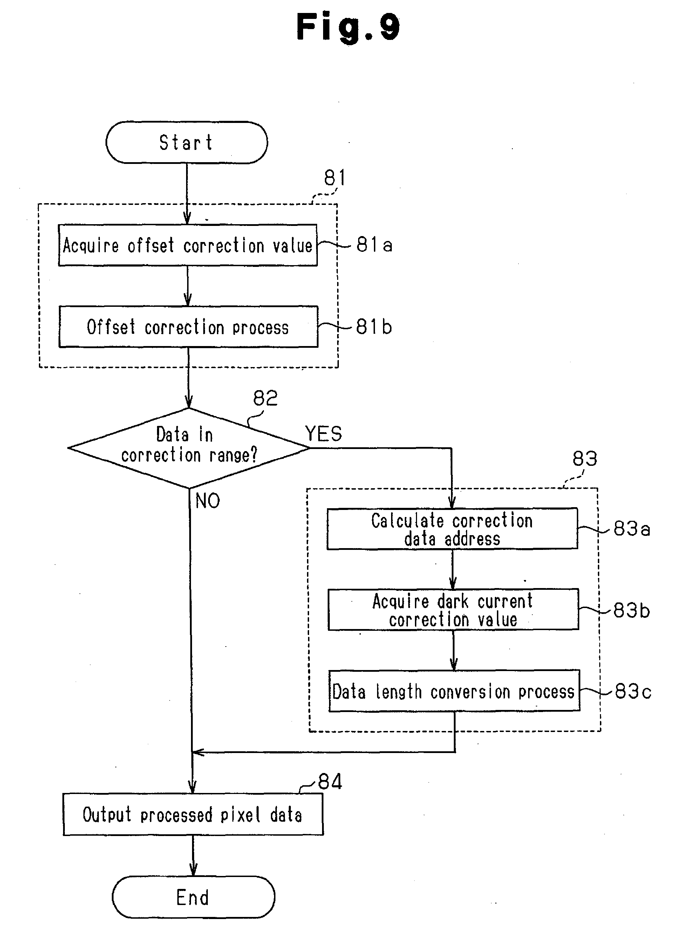

An imaging device 60 according to a second embodiment of the present invention will now be described with reference to Figs. 8 and 9.

Fig. 8 is a schematic block circuit diagram of the imaging device 60 according to the second embodiment of the present invention.

The imaging device 60 includes the solid state imaging device 11, a signal processor 62, and the oscillation circuit (OSC) 13.

The signal processor 62 includes a first correction means, a second correction means, a correction processing circuit 71 functioning as a determination means, a ROM 72 functioning as a first storage unit, and a lookup table (LUT) 73 functioning as a second storage unit. The correction processing circuit 71 is formed by a CPU and includes a memory for storing a correction processing program. The correction processing circuit 71 corrects the output signal of the solid state imaging device 11 in accordance with the correction processing program and outputs the corrected signal.

The ROM 72 is formed, for example, by an EEPROM. In the same manner as the correction data table 33 of the first embodiment, the ROM 72 stores plural pieces of correction data respectively corresponding to the plurality of image cells Ca included in the imaging circuit. In the same manner as the first embodiment, each piece of correction data includes the table number 42 and the fixed pattern noise offset (FPN offset) 43 (refer to Fig. 3).

In the same manner as the low illuminance range error data table 34 of the first embodiment, the LUT 73 includes a plurality of tables. Each table stores the data of a single curve. The table number 42 indicates the corresponding relationship of the tables and image cell Ca.

Fig. 9 is a flowchart showing the correction processing program executed by the correction processing circuit 71 of Fig. 8. The correction processing circuit 71 corrects the output signal of the solid state imaging device 11 in accordance with the processes of steps 81 to 84 shown in Fig. 9.

An offset correction process of step 81 includes two sub-steps 81a and 81b. In step 81a, the correction processing circuit 71 accesses the ROM 72 and acquires the table number 42 and the FPN offset 43. More specifically, the correction processing circuit 71 provides the ROM 72 with an address indicating the position of an image cell Ca and acquires from the ROM 72 the table number 42 and FPN offset 43 corresponding to the address.

In step 81b, the correction processing circuit 71 adds the FPN offset 43 read from the ROM 72 to the output signal of the solid state imaging device 11 and performs offset correction on the output signal of the solid state imaging device 11.

In step 82, the correction processing circuit 71 determines whether or not the data that has undergone the offset correction process is included in the low illuminance range. When the data is included in the low illuminance range, the correction processing circuit 71 executes the process of step 83.

A dark current correction process of step 83 includes three sub-steps 83a, 83b, and 83c. In a correction data address calculation process of step 83a, the correction processing circuit 71 calculates an address to read data (table) from the LUT 73 based on the data and table number 42 after the offset correction process. The plurality of tables included in the LUT 73 is stored in a plurality of regions obtained by dividing a single memory region. Accordingly, the plurality of addresses respectively corresponding to the plurality of tables are successive. Thus, the correction processing circuit 71 uses the table number 42 as an upper rank address and the data after the offset correction process as a lower rank address to calculate the correction data address for reading correction data.

In a dark current correction value acquisition process of step 83b, the correction processing circuit 71 provides the LUT 73 with the correction data address calculated in step 83a and acquires from the LUT 73 data corresponding to the LUT 73.

In a data length conversion process of step 83c, the correction processing circuit 71 converts the bit number of the data read from the LUT 73 to a predetermined bit number (ten bits). More specifically, the correction processing circuit 71 adds the two bits of "00" to the eight bits of data read from the LUT 37 in order to generate ten bits of data.

In a data output process of step 84, the correction processing circuit 71 outputs the data generated in step 83 as pixel data.

In step 82, when the data after the offset correction process is not included in the low illuminance range, the correction processing circuit 71 proceeds to step 84 and outputs the corrected data as the pixel data in step 84.

The imaging device 60 of the second embodiment has the same advantages as the first embodiment.

The above embodiments may be modified as described below.

In the first embodiment, the low illuminance range error data table 34 may include a table for each image cell. Further, in the second embodiment, the LUT 73 may include a table for each image cell.

In each of the embodiments, a calculation expression (coefficient of a calculation expression) may be stored in the low illuminance range error data table 34 and the LUT 73 to correct the output signal of each image cell Ca to a predetermined characteristic (e.g., average value) and the calculation expression may be used to correct data in the low illumination range.

In each of the embodiments, the number of transistors forming an image cells Ca may be changed as required.

## Claims

1. An imaging device comprising:
a solid state imaging unit including a plurality of image cells and generating a pixel signal having a logarithmic characteristic that is in accordance with an amount of incident light entering each image cell;
a first storage unit storing first correction data for correcting the pixel signal;
a second storage unit storing second correction data for correcting the pixel signal when generated in a low illuminance range with the incident light amount of at least one of the image cells being relatively small;
a first correction means that corrects the pixel signal based on the first correction data and generates first pixel data; and
a second correction means that corrects the first pixel data based on the second correction data and generates second pixel data.

2. The imaging device according to claim 1, wherein:
the second storage unit includes tables, the quantity of which is less than the amount of the plurality of image cells, as the second correction data; and
the first correction data includes a table number for associating each of the image cells with one of the tables and an offset value for correcting the pixel signal so that the first pixel data is the same in the plurality of image cells.

3. The imaging device according to claim 1 or 2 further comprising:
a determination means for determining whether or not the first pixel data is included in the low illuminance range; and
the determination means provides the first data to the second correction means when the first pixel data is included in the low illuminance range and determines the first pixel data to be output data of the imaging device when the first pixel data is not included in the low illuminance range.

4. A signal processor for correcting a pixel signal generated by a solid state imaging unit including a plurality of image cells, wherein the pixel signal has a logarithmic characteristic that is in accordance with an amount of incident light entering each image cell, the signal processor comprising:
a first storage unit storing first correction data for correcting the pixel signal:
a second storage unit storing second correction data for correcting the pixel signal when generated in a low illuminance range with the incident light amount of at least one of the image cells being relatively small;
a first correction means that corrects the pixel signal based on the first correction data and generates first pixel data; and
a second correction means that corrects the first pixel data based on the second correction data and generates second pixel data.

5. A method for correcting a pixel signal generated by a solid state imaging unit including a plurality of image cells, wherein the pixel signal has a logarithmic characteristic that is in accordance with an amount of incident light entering each image cell, the method comprising the steps of:
generating first pixel data by correcting the pixel signal based on first correction data;
generating second pixel data by correcting the first pixel data based on second correction data for correcting the pixel signal when generated in a low illuminance range with the incident light amount of at least one of the image cells being relatively small.
